# EUROPÄISCHE PATENTSCHRIFT

(11) **EP 2 143 992 B1**
(45) Veröffentlichungstag und Bekanntmachung des Hinweises auf die Patenterteilung: **01.08.2018**
(21) Anmeldenummer: 09174227.0
(22) Anmeldetag: 31.03.2008
(51) Int. Cl.: F21V 14/00, G02B 26/08, B60Q 1/00, F21S 41/60

(54) **Beleuchtungseinrichtung mit zwei nutzbaren Lichtwegen**
Lighting device with two usable optical path lengths
Dispositif d'éclairage doté de deux trajectoires de lumière utiles

(30) Priorität: 18.06.2007 DE 102007027952
(43) Veröffentlichungstag der Anmeldung: 13.01.2010
(62) Teilanmeldung aus: 08153717.7
(73) Patentinhaber: Zumtobel Lighting GmbH, 6850 Dornbirn (AT)
(72) Erfinder: Ladstätter, Gerald, 6833, Klaus (AT)
(74) Vertreter: Thun, Clemens

(56) Entgegenhaltungen:
- EP-A- 0 652 399
- DE-A1- 4 202 606
- DE-A1- 19 530 008
- DE-A1- 19 737 653
- DE-A1- 19 907 943

## Beschreibung

Die vorliegende Erfindung betrifft eine Beleuchtungseinrichtung, die eine Lichtquelle und eine Umlenkeinrichtung mit mindestens einem Umlenkelement aufweist. Über die Umlenkeinrichtung kann das abgestrahlte Licht der Lichtquelle wahlweise über einen ersten Lichtweg oder einen zweiten Lichtweg durch die Beleuchtungseinrichtung abgegeben werden.

Beleuchtungseinrichtungen mit einer Umlenkeinrichtung können ihr abgestrahltes Licht zumeist in zwei unterschiedliche Richtungen bzw. über zwei unterschiedliche Lichtwege abgeben. Bei vielen bekannten Techniken wird jedoch nur einer der beiden Lichtwege tatsächlich genutzt. So kommt beispielsweise bei der bekannten DLP-Technologie, die unter anderem auch bei Beamern verwendet wird, in einem der beiden Lichtwege eine lichtabsorbierende Vorrichtung zum Einsatz. Das mit Hilfe eines Farbrades erzeugte farbige Licht wird dann je nach gewünschter Farbe und Stellung des Farbrades entweder in die lichtabsorbierende Vorrichtung gelenkt oder über den zweiten Lichtweg nach außen abgegeben, wo es dann zur Darstellung von Bildern dient. Bei derartigen Beleuchtungseinrichtungen geht dementsprechend ein Teil der Lichtenergie in der lichtabsorbierenden Vorrichtung verloren.

In der deutschen Offenlegungsschrift DE 199 07 943 A1 wird eine Scheinwerferanordnung für Fahrzeuge beschrieben, welche eine Lichtquelle aufweist, die von einem Reflektor umgeben ist, in dem sich eine Umlenkvorrichtung befindet. Die Lichtstrahlen der Lichtquelle treffen dabei sowohl auf den Reflektor als auch auf die Umlenkvorrichtung und werden anschließend durch die beiden Vorrichtungen vor den Scheinwerfer gelenkt. Dabei ergibt sich durch den Reflektor eine großflächige Grundlichtverteilung, die Umlenkvorrichtung hingegen lenkt die Lichtstrahlen in unterschiedliche Bereiche der Grundlichtverteilung, wodurch bestimmte Bereiche der Grundlichtverteilung stärker beleuchtet werden. Die Lichtstrahlen der Lichtquelle werden durch die Umlenkvorrichtung somit in unterschiedliche Richtungen reflektiert und unabhängig von der Richtung nach außen abgegeben.

Durch die in der DE 199 07 943 A1 beschriebene Scheinwerferanordnung kann das abgegebene Licht einer Lichtquelle von einer Umlenkvorrichtung zwar in unterschiedliche Richtungen reflektiert werden, jedoch eignet sich diese Anordnung nicht für komplexere Beleuchtungsanwendungen.

Ebenfalls eine Beleuchtungseinrichtung für Fahrzeuge mit einer Umlenkvorrichtung zeigt die DE 197 37 653 A1. Des Weiteren ist auch aus der US 7,090,353 B1 ein Beleuchtungseinrichtung bekannt, die mehrere Umlenkvorrichtungen aufweist

Der vorliegenden Erfindung liegt nun die Aufgabe zugrunde, eine Beleuchtungseinrichtung dahingehend auszugestalten und weiterzubilden, dass sie im Gegensatz zur DE 199 07 943 A1 auch für komplexere Beleuchtungsaufgaben geeignet ist. Ferner soll die Lichtleistung der Lichtquelle effektiv genutzt werden.

Die Aufgabe wird durch eine Beleuchtungseinrichtung gemäß Anspruch 1 gelöst. Vorteilhafte Weiterbildungen der Erfindung sind Gegenstand der abhängigen Ansprüche.

Erfindungsgemäß wird eine Beleuchtungseinrichtung mit einer Lichtquelle und einer Umlenkeinrichtung vorgeschlagen. Die Umlenkeinrichtung weist mindestens ein Umlenkelement auf, über welches das von der Lichtquelle abgestrahlte Licht wahlweise über einen ersten Lichtweg oder einen zweiten Lichtweg durch die Beleuchtungseinrichtung abgegeben werden kann, wobei in zumindest einem der beiden Lichtwege Mittel angeordnet sind, über welche das über diesen Lichtweg abgegebene Licht in seiner Farbe, Form, Intensität und/oder Abstrahlrichtung veränderbar ist und wobei in einem Lichtweg eine weitere Umlenkeinrichtung angeordnet ist, die das abgegebene Licht des Lichtwegs in die Richtung des weiteren Lichtwegs lenkt, derart dass anschließend beide Lichtwege deckungsgleich verlaufen. Zusätzlich ist ein halbdurchlässiger Spiegel in beiden Lichtwegen so angeordnet, dass die beiden Lichtwege anschließend deckungsgleich verlaufen.

Durch die Anordnung der Mittel in zumindest einem der beiden Lichtwege ist es nun möglich, dass die Lichtwege für unterschiedliche Beleuchtungsaufgaben genutzt werden können und damit die Beleuchtungseinrichtung sich nun auch für einen Einsatz bei komplexeren Beleuchtungsanwendungen eignet. So könnte beispielsweise über einen der Lichtwege Licht einer ersten Farbe und über den anderen Lichtweg Licht einer zweiten Farbe abgegeben werden. Eine weitere Möglichkeit ist die breitere oder engere Bündelung des Lichts.

Gemäß einer vorteilhaften Weiterbildung der vorliegenden Erfindung wird vorgeschlagen, dass die Umlenkelemente der Umlenkvorrichtung als Mikrospiegel ausgebildet sind, wobei die Umlenkvorrichtung dann insbesondere auch als DMD-Chip ausgebildet sein kann.

Bei weiteren bevorzugten Ausführungsformen der Erfindung ist in zumindest einem der beiden Lichtwege eine farbverändernde oder intensitätsverändernde Vorrichtung angeordnet. Die farbverändernde Vorrichtung kann beispielsweise als Farbrad und die intensitätsverändernde Vorrichtung kann beispielsweise als Graustufenrad ausgebildet sein. Bei der intensitätsverändernden Vorrichtung kann es sich aber auch um verstellbare Blenden handeln.

Vorteilhafterweise ist in zumindest einem der beiden Lichtwege ein Objektiv angeordnet, wobei vorzugsweise das über den entsprechenden Lichtweg abgegebene Licht durch das Objektiv gestreut oder fokussiert wird. Des Weiteren kann das Objektiv des einen Lichtwegs das abgegebene Licht streuen und das Objektiv des anderen Lichtwegs das abgegebene Licht fokussieren, wobei die Beleuchtungseinrichtung durch die Streuung einen großen Bereich weniger intensiv beleuchtet und durch die Fokussierung einen entsprechend kleineren Bereich intensiver beleuchtet.

Besonders vorteilhaft ist es, wenn die Beleuchtungseinrichtung das Licht beider Lichtwege auf den gleichen Bereich abgibt.

Bei einer weiteren vorzugsweisen Ausführungsform der Erfindung ist in zumindest einem der beiden Lichtwege eine Vorrichtung angeordnet, die das abgegebene Licht so verändert, dass durch das Licht statische oder dynamische Informationen dargestellt werden.

Vorteilhafterweise kann auch die Umlenkeinrichtung das abgegebene Licht eines Lichtwegs so verändern, dass durch das Licht statische oder dynamische Informationen dargestellt werden.

Gemäß einer weiteren vorteilhaften Weiterbildung der Erfindung wird vorgeschlagen, dass die Beleuchtungseinrichtung über einen Lichtweg einen Bereich gleichmäßig beleuchtet und innerhalb diesen Bereichs über den zweiten Lichtweg statische oder dynamische Informationen darstellt.

Nachfolgend soll die Erfindung anhand der beiliegenden Zeichnungen näher erläutert werden. Es zeigen:
- Fig. 1: den Aufbau eines ersten Ausführungsbeispiels einer Beleuchtungseinrichtung, bei der ein großer und ein kleiner Bereich beleuchtet wird;
- Fig. 2 und 3: den Aufbau eines zweiten und dritten Ausführungsbeispiels einer Beleuchtungseinrichtung, bei denen die Lichtwege nach Verlassen der Beleuchtungseinrichtung deckungsgleich sind und die Farbe des Lichts der beiden Lichtwege unterschiedlich ist;
- Fig. 4: den Aufbau eines vierten Ausführungsbeispiels einer Beleuchtungseinrichtung, mit einem gleichmäßig beleuchteten Bereich innerhalb dessen statische oder dynamische Informationen dargestellt werden.

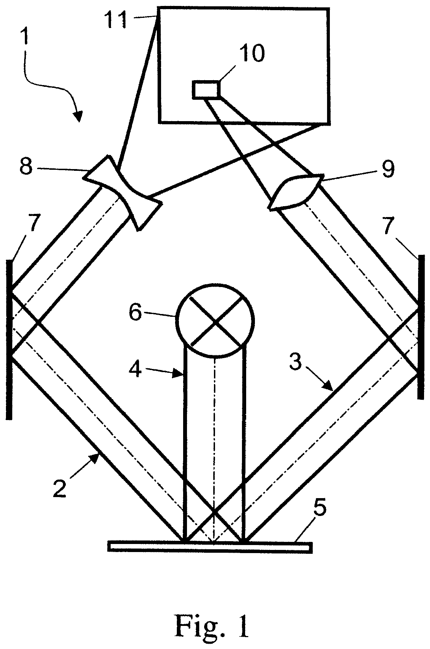

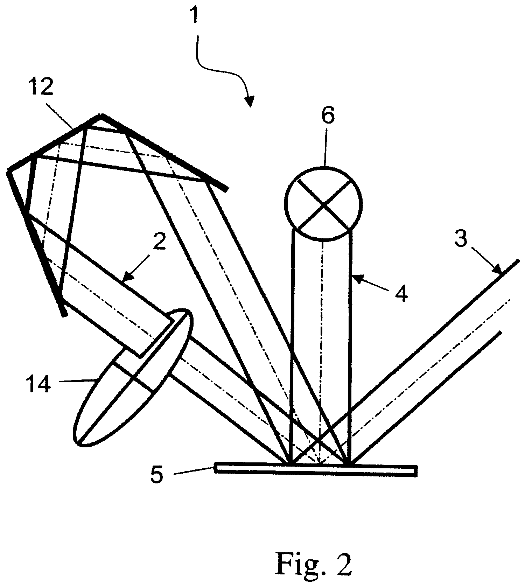

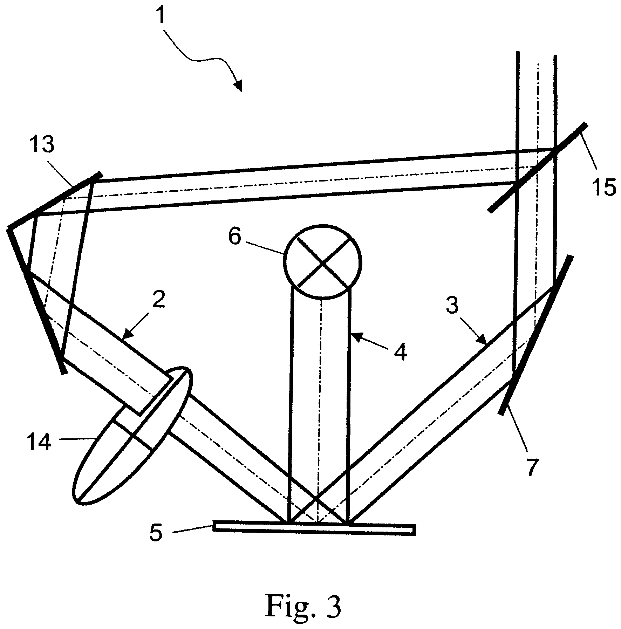

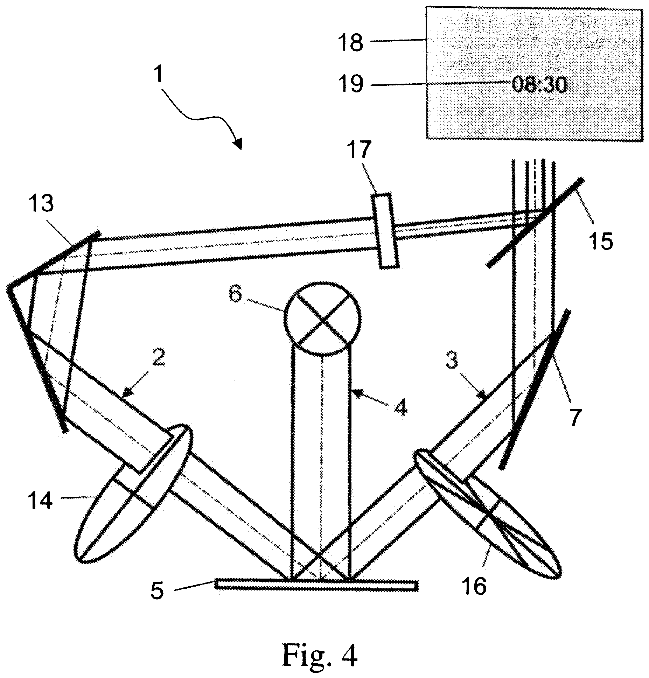

In den Fig. 1-4 sind vier verschiedene Ausführungsbeispiele einer Beleuchtungseinrichtung dargestellt, wobei lediglich die in den Fig. 3 und 4 gezeigten Ausführungsformen drei und vier erfindungsgemäße Beleuchtungseinrichtungen zeigen. Die in den Fig. 1 und 2 gezeigten Ausführungsformen eins und zwei zeigen keine erfindungsgemäßen Beleuchtungseinrichtungen und dienen lediglich als Beispiele zur besseren Erläuterung der Erfindung.

Fig. 1 zeigt schematisch den Aufbau einer Beleuchtungseinrichtung 1, die eine Lichtquelle 6 und eine Umlenkeinrichtung 5 aufweist. Die Lichtquelle 6 strahlt dabei ihr Licht 4 in Richtung der Umlenkeinrichtung 5 ab. Das auf die Umlenkeinrichtung 5 treffende Licht 4 wird dann, entsprechend der zwei Kippstellungen der Umlenkelemente der Umlenkeinrichtung 5, entweder in Richtung eines ersten Lichtwegs 2 oder in Richtung eines zweiten Lichtwegs 3 gelenkt. Damit das Licht beider Lichtwege 2 und 3 auf den gleichen Bereich abgegeben werden kann, ist jeweils in beiden Lichtwegen 2 und 3 ein weiteres Umlenkelement 7, beispielsweise ein Spiegel, derart positioniert, dass das Licht beider Lichtwege 2 und 3 anschließend den gleichen Bereich beleuchtet. Des Weiteren sind in beiden Lichtwegen 2 und 3 noch Objektive 8 und 9 angebracht, die das Licht beispielsweise fokussieren oder streuen. Bei den in Fig. 1 dargestellten Objektiven 8 und 9 handelt es sich um eine Sammellinse 9 und eine Zerstreuungslinse 8. Durch die Zerstreuungslinse 8 wird nun das Licht des ersten Lichtwegs 2 gestreut, womit ein großer Bereich 11 beleuchtet werden kann. Die Sammellinse 9 hingegen fokussiert das Licht des zweiten Lichtwegs 3, wodurch ein deutlich kleinerer Bereich 10 beleuchtet wird, der dadurch aber im Vergleich zu dem großen Bereich 11 deutlich heller beleuchtet ist. Durch die Anordnung der weiteren Umlenkelemente 7 befindet sich der durch den zweiten Lichtweg 3 beleuchtete kleinere Bereich 10 innerhalb des durch den ersten Lichtweg 2 beleuchteten größeren Bereichs 11.

Die in Fig. 1 dargestellte Beleuchtungseinrichtung 1 kann damit als Zwei-Zonen-Beleuchtung verwendet werden. Dabei weist die durch den ersten Lichtweg 2 definierte Zone eine breite Verteilung des Lichts auf, während hingegen bei der durch den zweiten Lichtweg 3 definierte Zone das Licht enger gebündelt wird, wodurch sich eine Reihe unterschiedlicher Einsatzmöglichkeiten ergeben. So kann beispielsweise ein gesamter Arbeitsbereich wie z.B. ein Raum über den ersten Lichtweg 2 beleuchtet werden und über den zweiten Lichtweg 3 ein Tisch der sich innerhalb dieses Raums befindet, wobei der Tisch dann in Form einer Akzentbeleuchtung besonders hell beleuchtet ist. Auch die Beleuchtung eines Tischbereichs durch den ersten Lichtweg 2 und die Bildung einer speziellen Lesezone am Tisch über den zweiten Lichtweg 3 wäre denkbar. Eine weitere Anwendungsmöglichkeit kann beispielsweise die Beleuchtung von Wänden mit Bildern sein, wobei dann die Wand über den ersten Lichtweg 2 großflächig beleuchtet wird und durch den zweiten Lichtweg 3 ein besonderer Fokus auf ein Bild gerichtet ist, das dann besonders hell angeleuchtet wird. Aber auch ein Einsatz bei der Gangbeleuchtung wäre denkbar, so würde hier ein Gang großflächig beleuchtet und Gefahrenbereiche oder Bereiche vor Türen würden stärker fokussiert und damit heller beleuchtet werden.

Die Umlenkeinrichtung 5 kann ein oder mehrere Umlenkelemente aufweisen. So könnte beispielsweise ein DMD-Chip von Texas Instruments Inc., der eine Vielzahl von Mikrospiegeln als Umlenkelemente aufweist, zum Einsatz kommen. DMD-Chips sind zum einen sehr klein und zum anderen weisen sie ein rechteckiges Chipformat auf, wodurch sie sich besonders gut zur Beleuchtung rechteckiger Flächen eignen. Aber auch eine Umlenkeinrichtung 5 mit nur einem Umlenkelement kann bei der in Fig. 1 gezeigten Beleuchtungseinrichtung 1 zum Einsatz kommen, da das abgestrahlte Licht 4 entweder vollständig in Richtung des ersten Lichtwegs 2 oder aber in Richtung des zweiten Lichtwegs 3 gelenkt wird. Um nun eine für den Menschen gleichzeitige Beleuchtung der beiden Bereiche 10 und 11 zu imitieren, muss das Umlenkelement bzw. die Umlenkelemente der Umlenkeinrichtung 5 von der einen in die andere Kippstellung mit ausreichend schneller Geschwindigkeit wechseln.

Die in Fig. 1 dargestellten Linsen 8 und 9 dienen hier zur Veranschaulichung der Objektive. Anstelle der Linsen können aber durchaus auch andere Objektive zum Einsatz kommen, die auch andere Aufgaben erfüllen können. So wären beispielsweise Objektive denkbar, die eine manuelle Einstellung ermöglichen. Auch muss nicht zwangsläufig in beiden Lichtwegen ein Objektiv angeordnet sein. Es wäre auch denkbar, dass in nur einem Lichtweg ein Objektiv angeordnet ist.

Die Anordnung der Umlenkeinrichtung 5 und der Umlenkelemente 7 ist nur beispielhaft dargestellt. So kann z.B. bei der Verwendung eines DMD-Chips eine völlig andere Anordnung notwendig sein, da die Umlenkelemente des DMD-Chips in einem Winkel von ± 12° hin und her kippen.

Wie in Fig. 1 ist auch in Fig. 2 ein schematischer Aufbau einer Beleuchtungseinrichtung 1 dargestellt, die eine Lichtquelle 6 und eine erste Umlenkeinrichtung 5 aufweist, die das von der Lichtquelle 6 abgestrahlte Licht 4 entweder in Richtung des ersten Lichtweges 2 oder in Richtung des zweiten Lichtweges 3 ablenkt. Zusätzlich ist in dem ersten Lichtweg 2 noch eine farbverändernde Vorrichtung angebracht, die als Farbrad 14 ausgebildet ist. Des Weiteren ist in dem ersten Lichtweg 2 auch noch eine zweite Umlenkvorrichtung 12 derart angeordnet, dass der erste Lichtweg 2 auf die erste Umlenkvorrichtung 5 zurückreflektiert wird, so dass der erste Lichtweg 2 und der zweite Lichtweg 3 anschließend deckungsgleich verlaufen.

Entsprechend der Stellung des Farbrades 14 lenkt nun die erste Umlenkeinrichtung 5 das abgegebene Licht 4 entweder in Richtung des ersten Lichtwegs 2 und dann erst in Richtung des zweiten Lichtwegs 3 oder aber direkt in Richtung des zweiten Lichtwegs 3. Wird beispielsweise ein RGB-Farbrad genutzt und die Farbe Rot benötigt, so wird das Licht während den unerwünschten Farbradstellungen (Grün, Blau) durch die erste Umlenkeinrichtung 5 direkt in Richtung des zweiten Lichtwegs 3 reflektiert. Befindet sich jedoch das RGB-Farbrad in der gewünschten roten Stellung, wird das abgegebene Licht 4 durch die erste Umlenkeinrichtung 5 zuerst in Richtung des ersten Lichtwegs 2 reflektiert, wo es dann wieder über die zweite Umlenkeinrichtung 12 zurück auf die erste Umlenkeinrichtung 5 und in Richtung des ersten Lichtwegs 3 reflektiert wird. Damit wird das von der Beleuchtungseinrichtung 1 insgesamt abgegebene Licht in der Farbintensität zwar abgeschwächt, jedoch erhöht sich durch die Nutzung des ungefärbten Lichts während den unerwünschten Farbradstellungen die Leuchtkraft der gesamten Beleuchtungseinrichtung 1, im Gegensatz beispielsweise zur DLP-Technologie, wo das Licht während den unerwünschten Farbradstellungen in eine lichtabsorbierende Vorrichtung gelenkt wird.

Bei vielen Anwendungen, bei denen derartige Beleuchtungseinrichtungen zum Einsatz kommen, ist eine hohe Leuchtkraft gewünscht. Die Farbintensität hingegen spielt dabei meist nur eine untergeordnete Rolle. So kann eine Beleuchtungseinrichtung beispielsweise bei der farbigen Außenbeleuchtung von Gebäuden, bei denen ein häufiger Farbwechsel der Beleuchtung benötigt wird, Anwendung finden.

Bei der Verwendung von Farbrädern für die farbverändernde Vorrichtung sind nicht nur RGB-Farbräder denkbar, sondern je nach Einsatzgebiet ein entsprechend angepasstes Farbrad. So könnte ein Farbrad beispielsweise so angepasst werden, dass es für Anwendungen mit dem Fokus gesundes Licht und Farbtemperaturänderungen des Tageslichts ausgelegt ist.

Die in Fig. 3 dargestellte Ausführungsform dient dem gleichen Zweck wie bereits die in Fig. 2 dargestellte Beleuchtungseinrichtung 1, wobei es sich bei der in Fig. 3 gezeigten um eine erfindungsgemäße Beleuchtungseinrichtung handelt. So wird auch bei dieser Beleuchtungseinrichtung 1 das ungefärbte Licht während den unerwünschten Farbradstellungen weiter verwendet. Ebenso wie in Fig. 2 ist auch in Fig. 3 in dem ersten Lichtweg 2 ein Farbrad 14 angeordnet, jedoch reflektiert die in dem Lichtweg 2 angeordnete zweite Umlenkvorrichtung 13 das Licht nicht wieder auf die erste Umlenkvorrichtung 5 zurück, sondern stattdessen in Richtung eines halbdurchlässigen Spiegels 15. Zusätzlich befindet sich noch ein reflektierendes Element 7 in dem zweiten Lichtweg 3, wodurch dieser ebenfalls in Richtung des halbdurchlässigen Spiegels 15 gelenkt wird, sodass die beiden Lichtwege 2 und 3 nach dem halbdurchlässigen Spiegel 15 deckungsgleich sind. Auch hier ergeben sich die gleichen Vor- und Nachteile in der Leuchtkraft und Farbintensität wie dies bereits ausführlich bei Fig. 2 geschildert worden ist.

Die in den Fig. 2 und 3 dargestellten zweiten Umlenkvorrichtungen 12 und 13 können beispielsweise aus reflektierenden Elementen bestehen, die entsprechend angeordnet sind. So ist bei der zweiten Umlenkvorrichtung 12 aus Fig. 2 der Einsatz von drei Spiegeln und bei der zweiten Umlenkvorrichtung 13 aus Fig. 3 von zwei Spiegeln denkbar.

In Fig. 4 ist ein schematischer Aufbau einer Beleuchtungseinrichtung 1 dargestellt, der zur Beleuchtung und zur Darstellung von Informationen geeignet ist, wobei es sich bei der in Fig. 4 gezeigten um eine erfindungsgemäße Beleuchtungseinrichtung handelt. So ist, wie bereits schon in den vorherigen Ausführungsbeispielen erläutert, auch hier eine Lampe 6 angeordnet, die in Richtung einer ersten Umlenkeinrichtung 5 ihr Licht abgibt, wobei die erste Umlenkeinrichtung 5 das abgestrahlte Licht 4 entweder in Richtung des ersten Lichtwegs 2 oder in Richtung des zweiten Lichtwegs 3 reflektiert.

Im ersten Lichtweg 2 befindet sich wiederum ein Farbrad 14, das das Licht des ersten Lichtwegs 2 entsprechend in der Farbe ändern kann. Ebenso wie in der erfindungsgemäßen Beleuchtungseinrichtung 1 aus Fig. 3 ist auch hier im ersten Lichtweg 2 eine zweite Umlenkvorrichtung 13 derart angeordnet, dass das Licht anschließend in Richtung eines halbdurchlässigen Spiegels 15 gerichtet wird. Zusätzlich befindet sich jedoch noch nach der zweiten Umlenkvorrichtung 13 und vor dem halbdurchlässigen Spiegel 15 eine Vorrichtung zur Informationseingabe 17. Mit Hilfe dieser Vorrichtung zur Informationseingabe 17, die beispielsweise als LCD-Panel ausgebildet sein kann, wird das Licht des ersten Lichtwegs 2 derart verändert, dass es anschließend statische oder dynamische Informationen darstellt. Auch im zweiten Lichtweg 3 befindet sich wie auch in der erfindungsgemäßen Beleuchtungseinrichtung 1 aus Fig. 3 ein reflektierendes Element 7, das derart angeordnet ist, dass das Licht des zweiten Lichtwegs 3 anschließend auf den halbdurchlässigen Spiegel 15 gelenkt wird. Des Weiteren ist in dem zweiten Lichtweg 3 noch ein Graustufenrad 16 angeordnet, das das Licht des zweiten Lichtwegs 3 in seiner Grauabstufung regulieren kann.

Das Licht des zweiten Lichtwegs 3 dient nun zur generellen Beleuchtung einer Fläche 18, in der mit Hilfe vom ersten Lichtweg 2 statische oder dynamische Informationen 19 dargestellt werden können. Dabei kann das Graustufenrad 16 beispielsweise Stellungen von transparent bis schwarz aufweisen, womit auf der einen Seite bei transparenter Stellung des Graustufenrads 16 der zweite Lichtweg 3 vergleichbar mit einem Lichtweg ohne Graustufenrad 16 ist und auf der anderen Seite bei schwarzer Stellung des Graustufenrads 16 aus dem zweiten Lichtweg 3 eine Lichtfalle wird, wodurch die erfindungsgemäße Beleuchtungseinrichtung 1 vergleichbar mit einem Beamer mit DLP-Technologie ist, da das Graustufenrad 16 in diesem Fall als lichtabsorbierende Vorrichtung angesehen werden kann.

Die in Fig. 4 gezeigte erfindungsgemäße Beleuchtungseinrichtung 1 kann in vielen Anwendungsgebieten zum Einsatz kommen. So ist beispielsweise die Verwendung in Läden des Einzelhandels denkbar, wo beispielsweise durch den ersten Lichtweg 2 eine Produktinformation punktgenau auf eine entsprechende Stelle eines Regals geleuchtet wird und zusätzlich über den zweiten Leuchtweg 3 das Regal großflächig beleuchtet werden kann. Durch das Farbrad 14 kann dann diese Produktinformation in ihrer Farbe verändert werden und auf der anderen Seite kann durch das Graustufenrad 16 die Helligkeit der gesamten Beleuchtung reguliert werden. Aber auch ein Einsatz der erfindungsgemäßen Beleuchtungseinrichtung 1 in großen Gebäuden als Leitsystem ist möglich. Hier könnte dann beispielsweise mit dem zweiten Lichtweg 3 ein Gang beleuchtet werden, in den dann durch den ersten Lichtweg 2 zusätzlich Informationen wie Stockwerk, Raumnummern oder Wegweiser eingeblendet werden. Ein weiteres Einsatzgebiet ergibt sich bei der Beleuchtung von Arbeitsplätzen. So wird beispielsweise ein Tisch über den zweiten Lichtweg 3 beleuchtet, auf den dann über den ersten Lichtweg 2 zusätzlich Informationen wie beispielsweise die Zeit oder Termine eingeblendet werden.

Um statische oder dynamische Informationen darzustellen, ist es nicht zwingend erforderlich, dass eine Vorrichtung zur Informationseingabe 17 vorhanden ist. Es wäre auch denkbar, das beispielsweise die erste Umlenkeinrichtung 5 als DMD-Chip ausgebildet ist, der dann entsprechend der gewünschten Informationen die Mikrospiegel ausrichtet.

Dadurch können dann auch die in den Fig. 2 und 3 gezeigten Beleuchtungseinrichtungen 1 einen der beiden Lichtwege zur Darstellung von statische oder dynamische Informationen und den anderen Lichtweg zur Beleuchtung nutzen.

Die Erfindung ist nicht auf die Ausführungsbeispiele in den Fig. 3 und 4 beschränkt. So ist auch die Verwendung von Mitteln eines anderen Ausführungsbeispiels in einem der Ausführungsbeispiele 3 und 4 denkbar. Beispielsweise könnte auch ein Graustufenrad 16 in Fig. 3 verwendet werden.

### Bezugszeichen

1. Beleuchtungseinrichtung
2. Lichtweg
3. Lichtweg
4. Lichtweg
5. Umlenkvorrichtung
6. Lichtquelle
7. reflektierendes Element
8. Objektiv (z.B. konvexe Linse)
9. Objektiv (z.B. konkave Linse)
10. kleiner ausgeleuchteter Bereich
11. großer ausgeleuchteter Bereich
12. Umlenkvorrichtung
13. Umlenkvorrichtung
14. Farbrad
15. halbdurchlässiger Spiegel
16. Graustufenrad
17. Vorrichtung zur Informationseingabe
18. Bereich mit gleichmäßiger Beleuchtungsstärke
19. statische oder dynamische Informationen

## Patentansprüche

1. Beleuchtungseinrichtung (1) mit einer Lichtquelle (6) sowie einer Umlenkeinrichtung (5) mit mindestens einem Umlenkelement, über welches das von der Lichtquelle (6) abgestrahlte Licht (4) wahlweise über einen ersten Lichtweg (2) oder einen zweiten Lichtweg (3) durch die Beleuchtungseinrichtung (1) abgegeben werden kann, wobei in zumindest einem der beiden Lichtwege (2, 3) Mittel angeordnet sind, über welche das über diesen Lichtweg (2, 3) abgegebene Licht in seiner Farbe, Form, Intensität und/oder Abstrahlrichtung veränderbar ist, und
wobei in einem Lichtweg (2, 3) eine weitere Umlenkeinrichtung (13) angeordnet ist, die das abgegebene Licht des Lichtwegs in die Richtung des weiteren Lichtwegs (2, 3) lenkt, **dadurch gekennzeichnet,**
**dass** ein halbdurchlässiger Spiegel (15) in beiden Lichtwegen (2, 3) so angeordnet ist, dass die beiden Lichtwege (2, 3) anschließend deckungsgleich verlaufen.

2. Beleuchtungseinrichtung (1) nach Anspruch 1,
**dadurch gekennzeichnet,**
**dass** das/die Umlenkelement/e der Umlenkeinrichtung (5) als Mikrospiegel ausgebildet ist/sind.

3. Beleuchtungseinrichtung (1) nach einem der Ansprüche 2,
**dadurch gekennzeichnet,**
**dass** die Umlenkeinrichtung (5) als DMD-Chip (Digital Micromirror Device) ausgebildet ist.

4. Beleuchtungseinrichtung (1) nach einem der Ansprüche 1-3,
**dadurch gekennzeichnet,**
**dass** in zumindest einem der beiden Lichtwege (2, 3) eine farbverändernde Vorrichtung (14), insbesondere ein Farbrad angeordnet ist.

5. Beleuchtungseinrichtung (1) nach einem der Ansprüche 1-4,
**dadurch gekennzeichnet,**
**dass** in zumindest einem der beiden Lichtwege (2, 3) eine intensitätsverändernde Vorrichtung (16), insbesondere ein Graustufenrad oder verstellbare Blenden angeordnet ist/sind.

6. Beleuchtungseinrichtung (1) nach einem der Ansprüche 1-5,
**dadurch gekennzeichnet,**
**dass** in zumindest einem der beiden Lichtwege ein Objektiv (8, 9) angeordnet ist.

7. Beleuchtungseinrichtung (1) nach Anspruch 6,
**dadurch gekennzeichnet,**
**dass** das Objektiv (8, 9) oder die Objektive das über den entsprechenden Lichtweg (2, 3) abgegebene Licht streuen oder fokussieren.

8. Beleuchtungseinrichtung (1) nach Anspruch 7,
**dadurch gekennzeichnet,**
**dass** das Objektiv (8, 9) oder die Objektive des einen Lichtwegs (2) das abgegebene Licht streuen und dass das Objektiv (8, 9) oder die Objektive des anderen Lichtwegs (3) das abgegebene Licht fokussieren, wobei die Beleuchtungseinrichtung (1) durch die Streuung einen großen Bereich (11) weniger intensiv beleuchtet und durch die Fokussierung einen entsprechend kleineren Bereich (10) intensiver beleuchtet.

9. Beleuchtungseinrichtung (1) nach Anspruch 1-8,
**dadurch gekennzeichnet,**
**dass** die Beleuchtungseinrichtung (1) das Licht beider Lichtwege (2, 3) auf den gleichen Bereich abgibt.

10. Beleuchtungseinrichtung (1) nach einem der Ansprüche 1-9,
**dadurch gekennzeichnet,**
**dass** in zumindest einem der beiden Lichtwege (2, 3) eine Vorrichtung (17) angeordnet ist, die das abgegebene Licht so verändert, dass durch das Licht statische oder dynamische Informationen (19) dargestellt werden.

11. Beleuchtungseinrichtung (1) nach einem der Ansprüche 1-9,
**dadurch gekennzeichnet,**
**dass** die Umlenkeinrichtung (5) das abgegebene Licht eines Lichtwegs (2, 3) so verändert, dass durch das Licht statische oder dynamische Informationen (19) dargestellt werden.

12. Beleuchtungseinrichtung (1) nach einem der Ansprüche 10-11,
**dadurch gekennzeichnet,**
**dass** die Beleuchtungseinrichtung (1) über einen Lichtweg (2, 3) einen Bereich (18) gleichmäßig beleuchtet und innerhalb diesen Bereichs (18) über den weiteren Lichtweg (2, 3) statische oder dynamische Informationen (19) darstellt.

## Claims

1. A lighting device (1) with a light source (6) as well as a deflection device (5) with at least one deflection element, by means of which the light (4) emitted by the light source (6) can optionally be emitted via a first light path (2) or a second light path (3) by the lighting device (1), wherein in at least one of the two light paths (2, 3) means are arranged, by means of which the light emitted via this light path (2, 3) can be changed in its color, shape, intensity and/or emission direction, and
wherein in one light path (2, 3) a further deflection device (13) is arranged, which deflects the emitted light of the light path in the direction of the further light path (2, 3), **characterized in**
**that** a semi-permeable mirror (15) is arranged in both light paths (2, 3) such that the two light paths (2, 3) subsequently run congruently.

2. A lighting device (1) according to Claim 1,
**characterized in**
**that** the deflection element(s) of the deflection device (5) is/are designed as a micromirror.

3. A lighting device (1) according to any one of Claims 1-2,
**characterized in**
**that** the deflection device (5) is designed as a DMD chip (Digital Micromirror Device).

4. A lighting device (1) according to any one of Claims 1-3,
**characterized in**
**that** in at least one of the two light paths (2, 3) a color-changing device (14), in particular, a color wheel is arranged.

5. A lighting device (1) according to any one of Claims 1-4,
**characterized in**
**that** in at least one of the two light paths (2, 3) an intensity-changing device (16), in particular, a grayscale wheel or adjustable screens is/are arranged.

6. A lighting device (1) according to any one of Claims 1-5,
**characterized in**
**that** a lens (8, 9) is arrangedin at least one of the two light paths.

7. A lighting device (1) according to Claim 6,
**characterized in**
**that** the lens (8, 9) or the lenses scatter or focus the light emitted via the corresponding light path (2, 3).

8. A lighting device (1) according to Claim 7,
**characterized in**
**that** the lens (8, 9) or the lenses of the one light path (2) scatter the light emitted and that the lens (8, 9) or the lenses of the other light path (3) focus the light emitted, wherein the lighting device (1) as a result of the scattering illuminates a large area (11) less intensely and as a result of the focusing illuminates a correspondingly smaller area (10) more intensely.

9. A lighting device (1) according to Claims 1-8,
**characterized in**
**that** the lighting device (1) emits the light of both light paths (2, 3) to the same area.

10. A lighting device (1) according to any one of Claims 1-9,
**characterized in**
**that** in at least one of the two light paths (2, 3) a device (17) is arranged, which changes the light emitted such that static or dynamic information (19) is displayed by the light.

11. A lighting device (1) according to any one of Claims 1-9,
**characterized in**
**that** the deflection device (5) changes the emitted light of a light path (2, 3) such that static or dynamic information (19) is displayed by the light.

12. A lighting device (1) according to any one of Claims 10-11,
**characterized in**
**that** the light device (1) illuminates an area (18) uniformly via one light path (2, 3) and within this area (18) displays static or dynamic information (19) via the further light path (2, 3).

## Revendications

1. Système d'éclairage (1) avec une source de lumière (6) ainsi qu'avec un système de déviation (5) avec au moins un élément de déviation par le biais duquel la lumière (4) émise par la source de lumière (6) peut être délivrée par le système d'éclairage (1) au choix par le biais d'un premier chemin de lumière (2) ou d'un deuxième chemin de lumière (3), des moyens étant disposés dans au moins un des deux chemins de lumière (2, 3), par le biais desquels éléments la lumière délivrée par biais de ce chemin de lumière (2, 3) peut être modifiée au plan de sa couleur, de sa forme, de son intensité et/ou de sa direction d'émission, et
un autre système de déviation (13) étant disposé dans un chemin de lumière (2, 3) et dirigeant la lumière émise du chemin de lumière en direction de l'autre chemin de lumière (2, 3),
**caractérisé en ce que**
qu'un miroir semi-transparent (15) est disposé dans les deux chemins de lumière (2, 3) de telle sorte que les deux chemins de lumière (2, 3) coïncident ensuite.

2. Système d'éclairage (1) selon la revendication 1,
**caractérisé en ce que**
l'élément/les éléments de déviation du système de déviation (5) est/sont constitué(s) en tant que micro-miroir(s).

3. Système d'éclairage (1) selon l'une des revendications 2,
**caractérisé en ce que**
le système de déviation (5) est constitué en tant que DMD-Chip (Digital Micromirror Device).

4. Système d'éclairage (1) selon l'une des revendications 1 à 3,
**caractérisé en ce**
**qu'**un dispositif (14) de modification de couleur, en particulier une roue des couleurs, est disposé dans au moins un des deux chemins de lumière (2, 3).

5. Système d'éclairage (1) selon l'une des revendications 1 à 4,
**caractérisé en ce**
**qu'**un dispositif (16) de modification d'intensité, en particulier une roue de niveaux de gris ou des diaphragmes réglables est/sont disposé(es) dans au moins un des deux chemins de lumière (2, 3).

6. Système d'éclairage (1) selon l'une des revendications 1 à 5,
**caractérisé en ce**
**qu'**un objectif (8, 9) est disposé dans au moins un des deux chemins de lumière.

7. Dispositif d'éclairage (1) selon la revendication 6,
**caractérisé en ce que**
l'objectif (8, 9) ou les objectifs dispersent ou focalisent la lumière délivrée par le biais du chemin de lumière (2, 3) correspondant.

8. Dispositif d'éclairage (1) selon la revendication 7,
**caractérisé en ce que**
l'objectif (8, 9) ou les objectifs d'un chemin de lumière (2) dispersent la lumière délivrée, et **en ce que** l'objectif (8, 9) ou les objectifs de l'autre chemin de lumière (3) focalisent la lumière délivrée, le dispositif d'éclairage (1), par la dispersion, éclaire de façon moins intensive une grande zone (11) et, par la focalisation, éclaire de façon plus intensive une zone (10) plus petite en conséquence.

9. Système d'éclairage (1) selon les revendications 1 à 8,
**caractérisé en ce que**
le dispositif d'éclairage (1) délivre la lumière des deux chemins de lumière (2, 3) sur la même zone.

10. Système d'éclairage (1) selon l'une des revendications 1 à 9,
**caractérisé en ce que,**
dans au moins un des deux chemins de lumière (2, 3), il est disposé un dispositif (17) qui modifie la lumière délivrée de telle sorte que des informations (19) statiques ou dynamiques sont représentées par la lumière.

11. Système d'éclairage (1) selon l'une des revendications 1 à 9,
**caractérisé en ce que**
le système de déviation (5) modifie la lumière délivrée d'un chemin de lumière (2, 3) de telle sorte que des informations (19) statiques ou dynamiques sont représentées par la lumière.

12. Système d'éclairage (1) selon l'une des revendications 10 à 11,
**caractérisé en ce que**,
par le biais d'un chemin de lumière (2, 3), le dispositif d'éclairage (1) éclaire uniformément une zone (18) et représente des informations (19) statiques ou dynamiques à l'intérieur de cette zone (18) par le biais de l'autre chemin de lumière (2, 3) .
